# EUROPEAN PATENT APPLICATION

(11) **EP 2 070 745 A1**
(43) Date of publication of application: **17.06.2009**
(21) Application number: 07123116.1
(22) Date of filing: 13.12.2007
(51) Int. Cl.: B60H 1/00, B60H 1/32, B60J 7/16

(54) **Vehicle with openable roof structure**

(71) Applicant: Inalfa Roof Systems Group B.V., 5804 AH Venray (NL)
(72) Inventor: Feijts, Pascal Jozef Maria, 6042 JD, ROERMOND (NL); De Queiroz Neto, Alfredo T., 08340-120, SAO MATEUS (BR)
(74) Representative: Metman, Karel Johannes

(57) **Abstract**

There is disclosed a truck having an opening (3) in its fixed roof (2) and having an open roof structure (1) comprising a movable cover (6) for selectively opening and closing the roof opening. The open roof structure (1) comprises a cooling device for introducing cooled air into the vehicle. The cooling device is part of an evaporative cooling system and includes evaporative members (4) and air flow means (5) to force air through the evaporative members and into the vehicle. The cooling device is integrated in the movable cover (6).

## Description

The invention relates to a vehicle, in particular a truck, having an opening in its fixed roof and having an open roof structure comprising a movable cover for selectively opening and closing the roof opening.

Such vehicles are well know in the art. The climate in the vehicle, in particular the cabin thereof, can be controlled in different ways. During driving, the cover of the open roof structure can be opened to allow fresh air to enter the vehicle. For hot environments, the vehicle is often equipped with an air condition unit to control the climate in the cabin. During stop periods, however, it is not possible to use this air condition unit for a longer period because these air condition units require power from a running engine and legal requirements for trucks determine that idling the engine for a longer period of time is or will be prohibited. In hot climates this may lead to an uncomfortable climate in the cabin.

In the prior art, this problem has been solved by removing the open roof structure (or hatch as such open roof structures are called when used for trucks) and to replace it by a cooling device requiring less power than an air condition unit. Such cooling device may for example be configured as evaporative cooling system which may run on the vehicle's battery for a longer period of time without being charged by the engine.

It is an object of the present invention to further improve the vehicle according to the preamble.

For this purpose, the vehicle according to the invention is **characterized in that** the open roof structure comprises a cooling device for introducing cooled air into the vehicle.

According to the invention, the advantages of both the open roof structure and the cooling device are combined. However, the open roof structure and the cooling device do not only have their own advantageous properties, but also work together in an advantageous manner. When the cabin is hot, the open roof structure can first be opened in order to allow hot air to leave the cabin from the top where hot air will accumulate. Ventilating means may promote this removal of the hot air. If sufficient hot air is removed, the cover can be closed and the cooling device can be activated to cause cool air to enter the cabin.

It is preferred according to the invention to integrate the cooling device into the cover as this is the most compact way of integrating the cooling device. This also allows the use of a standard circumferential size of the open roof structure so that it is possible to replace a normal open roof structure with an open roof structure with integrated cooling device.

It is advantageous if the cooling device is part of an evaporative cooling system and includes evaporative members and air flow means to force air through the evaporative members and into the vehicle. This evaporative cooling system is a system that is well known for its reliability and reduced power consumption so that it is well suited for this purpose. Of course, other cooling systems that fulfil these requirements could be used as well.

The invention also covers an open roof structure for use in the vehicle, in particular truck, described above.

Further advantages and details of the invention will become clearer from the following description with reference to the drawings showing an embodiment of the invention in a very schematic way.

Figs. 1 and 2 schematically show a truck according to the invention in side view and illustrate a manner of operating the open roof structure by showing two modes of operation.

Figs. 3 and 4 are schematic sectional views of the open roof structure according to the invention shown in the same modes of operation as in Figs. 1 and 2.

Fig. 5 is an exploded view of the open roof structure according to Figs. 3 and 4.

Fig. 6 is an exploded view of some parts of the cooling device of Figs. 3 and 4.

Fig. 7 is an enlarged cross section of Fig. 6 according to line VII-VII.

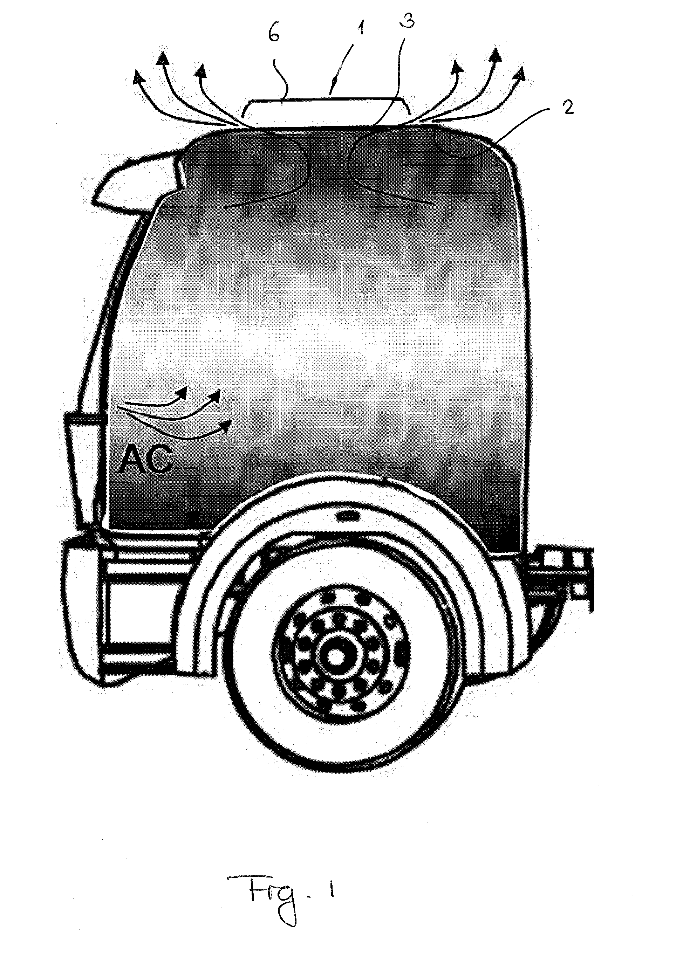

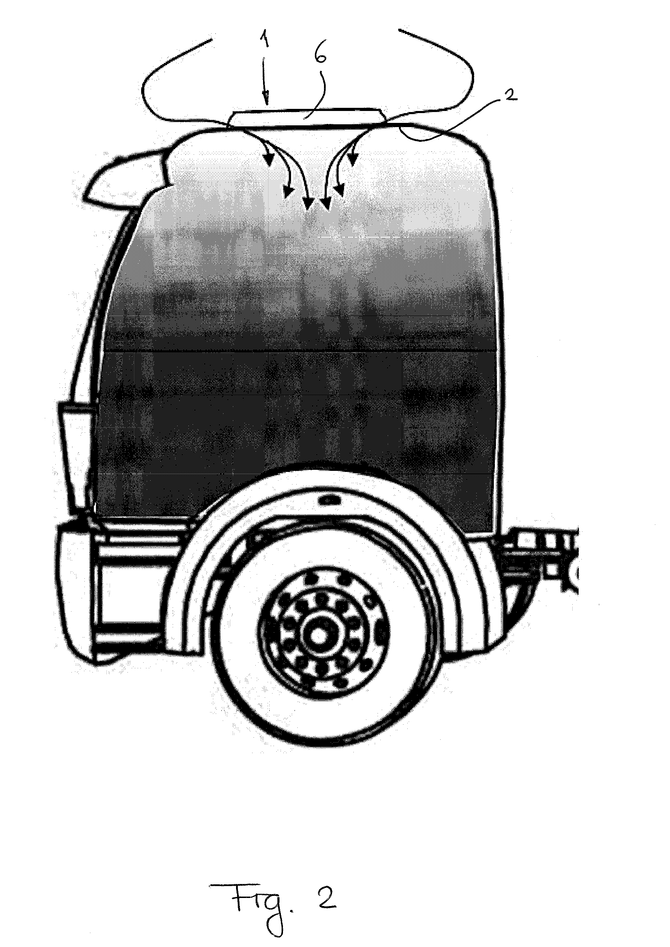

Figs. 1 and 2 show a vehicle according to the invention, which in this case is a truck, but which may also include other vehicles, such as campers, caravans and the like. This truck is provided with an open roof structure 1 which is mounted in or on the fixed roof 2 of the truck having an opening 3 therein. The fixed roof 2 may be the original fixed roof 2 of the truck, but may also be a replacement roof module.

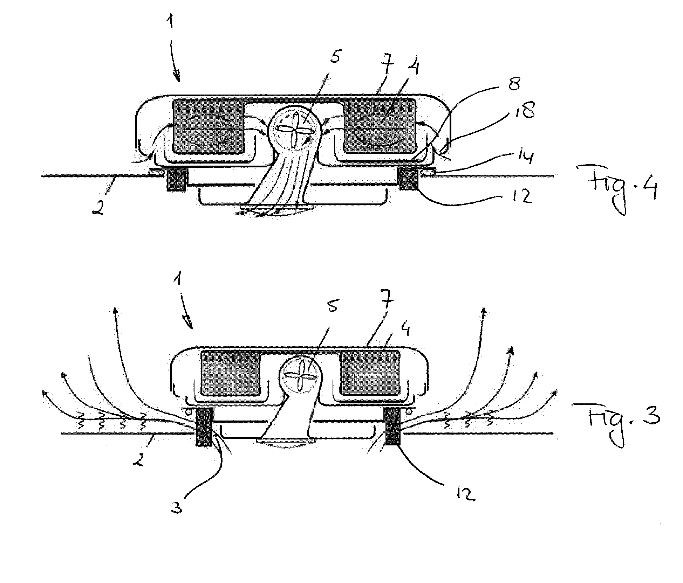

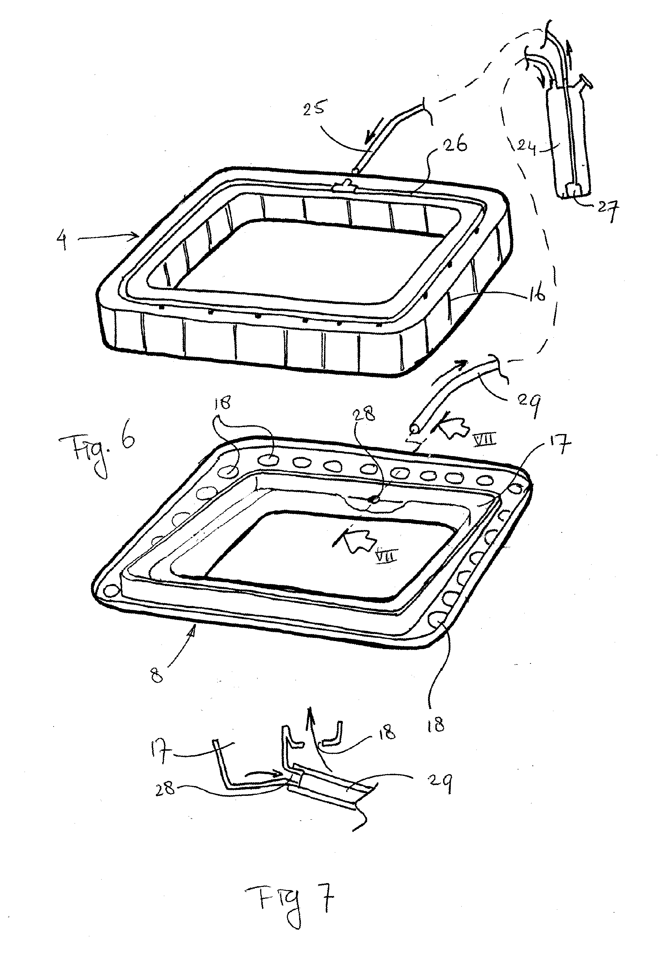

Figs. 3-7 schematically show the cooling device, the main part of which is integrated in the open roof structure 1. The cooling device is here an evaporative cooling system including evaporative members 4 and air flow means 5. The main part of the evaporative cooling system is integrated with a cover 6 of the open roof structure 1 and for this purpose the cover 6 not only comprises a cover panel 7, but also includes a water collecting tray 8, a support frame 9 and an outlet tray 10.

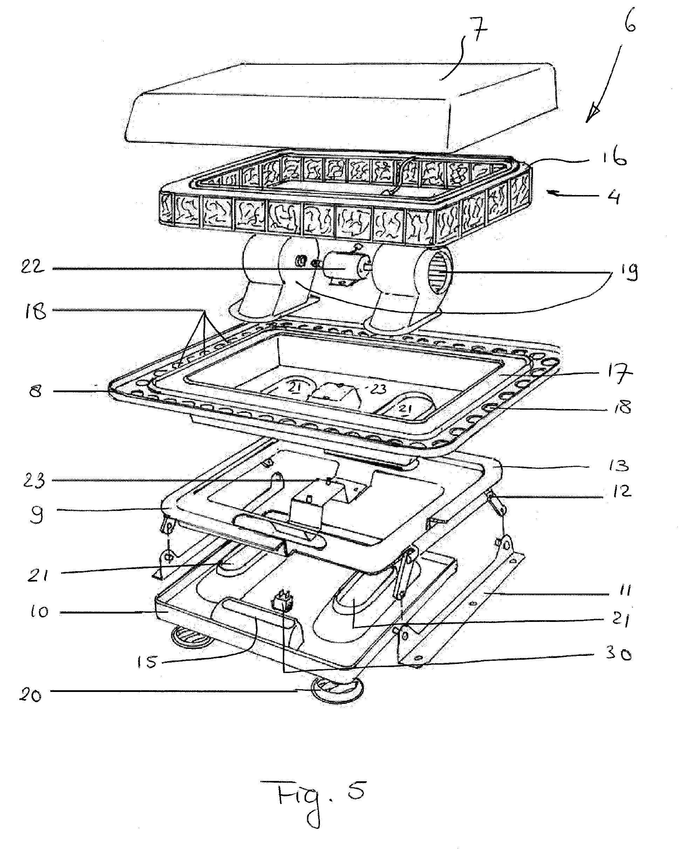

As is clearly shown in Fig. 5, the support frame 9 is connected to support brackets 11 through an operating mechanism 12 which enables to move the cover 6 between a closed position as shown in Fig. 4 and an open position according to Fig. 3. In the closed position of the cover 6 a flange 13 of the support frame 9 seals off the roof opening 3, preferably by means of a seal 14 provided on the fixed roof 2 or below the flange 13 as is shown in the drawings. The support brackets 11 are mounted on a lower part of the fixed roof 2 surrounding the roof opening 3, or on a frame provided therein. The operating mechanism 12 may be motorized, or the cover 6 may be operated manually through one or more grips 15 on the lower outlet tray 10 as is shown in Fig. 5. The operating mechanism 12 may be arranged to allow an upward an downward movement of the cover 6 only, or may also allow other movements, for example a movement in which only one of the sides of the cover 6 is moved upwardly, so that the cover 6 occupies an inclined position. The open roof structure may also be provided with an escape function such that the cover 6 is swung out completely to provide an escape opening, for example.

The evaporative members 4 here comprise evaporative pads provided in a rectangular ring-shaped frame 16 which is supported on a water collecting channel 17 which may collect excess water from the evaporative pads. Outwardly of the water collecting channel 17 there is provided a series of inlet openings 18 to allow environmental air to enter an air flow channel which extends from the outer side of the evaporative member 4 to the inner side thereof, then through a channel in the air flow means 5, here comprising two axial fans 19, and then through their outlets 20 in the outlet tray 10 to bring the air into the interior of the truck cabin. The air flow channel being defined between the cover panel 7 and the water collecting tray 8, and the evaporative member 4 being sealed towards each of these so that the air can only pass through the evaporative members 4.

The axial fans 19 are mounted on the outlet tray 10 having openings 21 to which the fans 19 are connected. The axial fans 19 are driven by means of an electric motor 22 which is mounted on a motor support 23 provided in the support frame 9.

The water to feed the evaporative members 4 is supplied from a water tank 24 which is connected through a conduit 25 to a distribution line 26 distributing the supplied water to the evaporative members 4. If the tank 24 is positioned lower than the evaporative members 4, then there will be provided a pump 27 to displace the water to the evaporative members 4. When air from the environment is directed through the evaporative members 4, the water present in the evaporative members 4 will evaporate and the air will be cooled because energy is extracted from the air to cause the evaporation. Any excess water from the evaporative members 4 is collected in the water collecting channel 17 and this water collecting channel 17 may be formed such that there is a lowest point for the provision of a drain 28 connecting to a water collecting conduit 29 extending back to the water tank 24 in order to reduce the water consumption.

The electrical cable for the axial fans 19 may be bundled with the water conduits 25 and 29 in order to extend from the movable cover 6 to the stationary part of the vehicle. A switch 30 may be provided to switch the cooling device on and off.

Figs. 3 and 4 show that the exit of air from the truck cabin through the roof opening 3 is completely separated from the entry of cool air from the cooling device. This air flows through a closed channel and leaves the cover 6 on the lower side thereof within the circumference thereof (Fig. 4), whereas the air from the cabin leaves the cabin near the circumference of the cover 6.

From the foregoing it will be clear that the invention provides a vehicle and a open roof structure for a vehicle which includes a compact cooling device integrated in the open roof structure so that it is very easy to build in the cooling device. The open roof structure is well suited for the after market and as a replacement of conventional open roof structures without cooling device.

The invention is not limited to the embodiments described here before and shown in the drawings and may be varied in different manners within the scope of the appended claims. For example, it would be possible to integrate the cooling device in a frame surrounding the roof opening. The air flow means may be constructed or arranged differently, for example may be arranged upstream of the evaporative members to press air through the members in stead of sucking it in.

## Claims

1. Vehicle, in particular a truck, having an opening in its fixed roof and having an open roof structure comprising a movable cover for selectively opening and closing the roof opening, **characterized in that** the open roof structure comprises a cooling device for introducing cooled air into the vehicle.

2. Vehicle according to claim 1, wherein the cooling device is integrated in the movable cover.

3. Vehicle according to any of the preceding claims, wherein the cooling device is part of an evaporative cooling system and includes evaporative members and air flow means to force air through the evaporative members and into the vehicle.

4. Vehicle according to claim 3, wherein the cooling system comprises at least an air inlet opening to allow air from the environment to enter an air flow channel which is connected to the inlet and extends through the evaporative members, and at least an air outlet connected to the air flow channel to allow air that has passed through the evaporative members to leave the open roof structure and enter the vehicle.

5. Vehicle according to claim 4, wherein the roof opening is separate from the air flow channel in the cooling system.

6. Vehicle according to any of claims 3 - 5, wherein the air flow means includes at least one motorized fan positioned in the air flow channel, preferably near the outlet.

7. Vehicle according to any of claims 3 - 6, wherein the evaporative members are positioned in a ring, the inlet being positioned outside this ring and the outlet being positioned inside this ring, the air flow channel extending from the inlet to the outlet through the ring-shaped evaporative members.

8. Vehicle according to any of claims 3 - 7, wherein the evaporative members are positioned above a water collecting reservoir, closing the air flow channel on its lower side.

9. Vehicle according to claim 8, wherein the water collecting reservoir and the air inlet of the air flow channel are integrated, the water collecting reservoir preferably having an excess water drain at the lowest position of the reservoir, said drain being connected to a water tank containing a supply of water, said water tank being connected to the evaporative members through a supply conduit, preferably a pump being provided for pumping water from the tank through the supply conduit to the evaporative members.

10. Open roof structure for use in the vehicle according to one of the preceding claims, comprising a movable cover for selectively opening and closing the roof opening in the fixed roof of the vehicle, **characterized in that** the open roof structure comprises cooling device for introducing cooled air into the vehicle.
